# EUROPEAN PATENT SPECIFICATION

(11) **EP 2 944 644 B1**
(45) Date of publication and mention of the grant of the patent: **01.11.2017**
(21) Application number: 14189470.9
(22) Date of filing: 20.10.2014
(51) Int. Cl.: C07F 9/6574, C08K 5/527

(54) **Spiro bisphosphite based compound and uses of the same**
Verbindung auf Spiro-Bisphosphit-Basis und Verwendungen davon
Composé à base de spiro bis-phosphite et utilisations de celui-ci

(30) Priority: 14.05.2014 TW 103116958
(43) Date of publication of application: 18.11.2015
(73) Proprietor: Chitec Technology Co., Ltd., Taipei City 106 (TW)
(72) Inventor: Chiu, Chingfan Chris, 106 Taipei City (TW)
(74) Representative: dompatent von Kreisler Selting Werner - Partnerschaft von Patent- und Rechtsanwälten mbB

(56) References cited:
- CN-A- 104 403 290
- CS-B1- 252 501
- US-A- 5 438 086

## Description

### Field of the Invention

The present invention relates to a spiro bisphosphite based compound and its uses, particularly its uses as an antioxidant in polymer compositions.

### Descriptions of the Related Art

Polymer materials due to their light weight, high mechanical strength and low cost advantages are commonly applied in various industries including automobiles, paint and coatings, constructions, etc. With the popularity of polymer materials, the additives which help boost and retain their properties during processing or increasing their lifespan have become an important industry. Antioxidants have been one of the most popular additives designed for polymer materials.

Antioxidant is a chemical substance that combats oxidation. When polymer materials are exposed to heat and air during processing, such as extruding, injection molding, compounding, etc., peroxyl radicals and hydroperoxides will be generated due to a phenomenon called "auto-oxidation cycle (AOC)." The AOC will cause the deterioration of polymer materials, such as discoloring, changes of melt flow index (MFI), loss of impact strength, etc. Therefore, it is necessary to add antioxidant(s) into polymer materials to inhibit the AOC phenomenon and thus prevent the deterioration of polymer materials from happening. A good antioxidant can effectively assist polymer materials against the AOC phenomenon with a very low dosage (e.g., 0.1 wt% based on the weight of polymer material).

There are two types of antioxidants: primary and secondary antioxidants. Primary antioxidants scavenge free radicals while secondary antioxidants decompose hydrogen peroxides. Primary antioxidants are mainly hindered phenol based compounds, while secondary antioxidants include phosphorus based compounds, sulfur based compounds, and amine based compounds. Among the commercially available secondary antioxidants, phosphorus based antioxidants enjoy the largest market share as they, unlike sulfur based antioxidants and amine based antioxidants, do not discolor nor release odor during the service life. However, most phosphorus-based antioxidants still have their weaknesses, such as low thermal stability and low hydrolytic stability.

Thermal stability is crucial for thermoplastic polymer materials as well, because during their service life, thermoplastic polymer materials must be processed at elevated temperature. For example, during polypropylene pipe extrusion, a process temperature over 280 °C is required, and while extruding engineering plastic such as polyethylene terephthalate (PET), a process temperature over 300 °C has to be adopted. At such a high temperature, the conventional phosphorus based antioxidants will rapidly vaporize, decompose or discolor.

As for hydrolytic stability, it is critical to the handling and storage of the antioxidant when moisture is present. Conventional phosphorus based antioxidants tend to hydrolyze in humid environment or when in contact with moisture. Once hydrolysis occurs, phosphorus-based antioxidants release phosphorous acid which is corrosive and causes discoloration. In addition, hydrolysis on the surface of antioxidants will cause caking and deliquescence which make processing much more difficult.

Phosphorus antioxidants with high hydrolytic stability normally suffer from low antioxidation efficiency. For example, a compound with a symmetrical triarylphosphite structure as shown by the following formula I described by US 4,187,212 (related product: Irgafos® 168) has an excellent hydrolytic stability. However, its antioxidation efficiency is only mediocre compared to other phosphorus based antioxidants such as spiro bisphosphite based antioxidants. Moreover, its thermal stability (the temperature at 1% weight loss) measured by Thermal Gravimetric Analysis (TGA) is merely 220 °C.

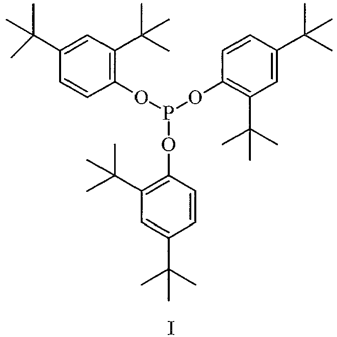

A spiro bisphosphite based antioxidant derived from pentaerythritol represented by the following formula II (related product: Weston® 626) is described by US 4,305,866, which shows the highest antioxidation efficiency as compared with other phosphorus based antioxidants, but is poor in hydrolytic stability and thermal stability. A spiro bisphosphite compound derived from cumyl substituted phenol represented by the following formula III is described by US 4,983,657, which shows a better thermal stability (TGA result: around 300 °C) but still comes with poor hydrolytic stability. Besides, both compounds of formula II and formula III degrade into a sticky mass after being exposed to air for several days.

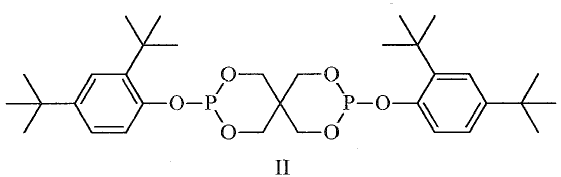

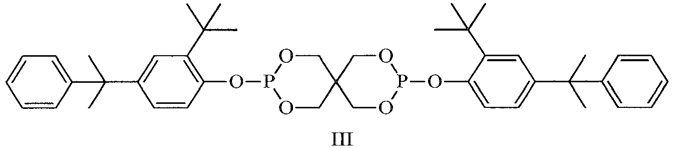

A compound represented by the following formula IV (related product: ADK STAB® PEP-36) is described by US 4,371,647, which has improved hydrolytic stability, but shows no further improvement on thermal stability.

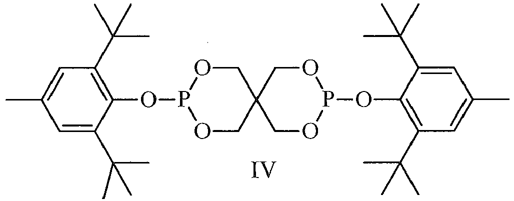

A compound represented by the following formula V (related product: Doverphos® 9228) is described by US 5,364,895 and US 5,438,086. Although the compound has excellent thermal stability and hydrolysis stability, its TGA temperature is merely 265 °C. Moreover, this compound has low solubility in organic solvents (for example, <0.01% in heptane, 20 °C) and very high melting point (>225 °C) that result in processing difficulties during masterbatch or compounding processing.

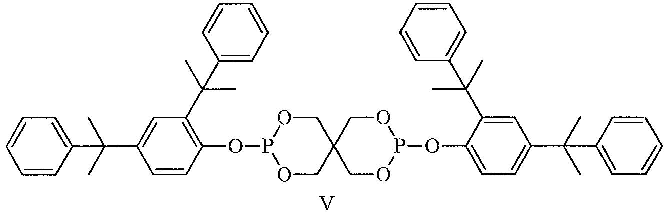

Another phosphorous compound represented by the following formula VI (related product: Irgafos® 12) is described by US 4,318,845, which bears an exceptional hydrolytic stability rendered by the basicity of tertiary amine contained in the structure. However, its TGA temperature is merely 250 °C, and it rapidly discolors at temperature higher than 280 °C. Therefore, the thermal stability of the compound is insufficient for the polymers requiring high-temperature process. In addition, the synthesis of this compound is lengthy, complicated and costly.

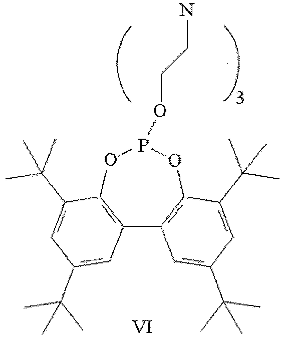

In view of the above, the industry is still looking for a new phosphorus based antioxidant with excellent antioxidation efficiency, thermal stability and hydrolytic stability.

### SUMMARY OF THE INVENTION

An objective of the present invention is to provide a spiro bisphosphite based compound which has a high hydrolytic stability and an exceptional high thermal stability, while maintaining a high antioxidation efficiency. The compound is represented by the following formula VII': 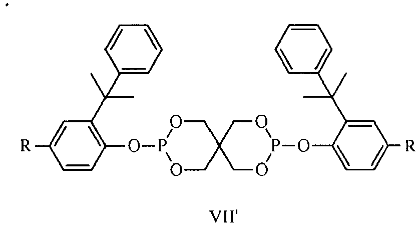 wherein R is C₄-C₉ alkyl, which means a cyclic, linear or branched alkyl group with 4 to 9 carbon atoms.

Another objective of the present invention is to provide an antioxidant, comprising the spiro bisphosphite based compound mentioned above.

Still another objective of the present invention is to provide a polymer composition, comprising a polymer; and the spiro bisphosphite based compound or the antioxidant mentioned above.

To further explain the above described objective, the technical features and advantages clearly, the present invention is described by the embodiments as follow.

### BRIEF DESCRIPTION OF THE DRAWINGS

Not applicable.

### DESCRIPTION OF THE PREFERRED EMBODIMENT

Hereinafter, some embodiments of the present invention will be described in detail. The present invention may be embodied in various embodiments and should not be limited to the embodiments described in the specification. Furthermore, unless it is additionally explained, the expressions "a," "the," or the like recited in the specification of the present invention (especially in the claims) should include both the singular and the plural forms.

Polymer degradation is the deterioration in the physicochemical properties of a polymer caused by a chemical reaction. Symptoms of degradation include yellowing, loss of tensile strength, loss of impact strength, changes in MFI, etc. Degradation tends to occur especially during the drying, pelletizing, compounding and processing processes of polymer, the storage of polymer, and the recycling of polymer. One technique to ameliorate polymer degradation is through the use of an additive, especially an antioxidant.

Among commonly used phosphorus based antioxidants, spiro bisphosphite based compounds provide the best antioxidation efficiency. Disadvantages associated with spiro bisphosphites are their low stability toward hydrolysis and low resistance to high process temperature (300 °C and above). In comparison with conventional spiro bisphosphite based compounds for antioxidant use, the compound of the present invention features in that the functional groups at the para positions of benzene rings (i.e. group "R" in formula VII') are aliphatic C₄-C₉ alkyl groups. This is advantageous in both the synthesis and application of the compound. Specifically, during the synthesis of the compound, the solubility of the compound of the present invention in organic solvent is significantly better than that of the conventional spiro bisphosphite based compounds whose functional groups at the para positions of benzene rings are aromatic groups (the compound of formula V for example), which is beneficial to the purification of the product and therefore leads to a product with high purity and stable quality. Besides, the compound of the present invention has excellent antioxidation efficiency, thermal stability and hydrolytic stability, whose TGA temperature is higher than 320 °C. The compound of the present invention is therefore suitable for the polymer materials that need to be processed at high temperature, such as thermoplastic polymers, like polyhydrocarbons and polyester.

Specifically, the compound of the present invention may be represented by the following formula VII' : 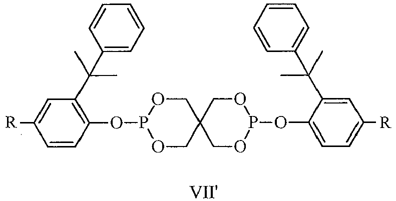 wherein R is C₄-C₉ alkyl, preferably C₇-C₉ alkyl, more preferably C₈ alkyl. The terms "C₄-C₉ alkyl", "C₇-C₉ alkyl" and "C₈ alkyl" respectively represent a cyclic, linear or branched alkyl group with 4 to 9, 7 to 9, or 8 carbon atoms, for example, isobutyl, tert-butyl, neopentyl, cyclopentyl, cyclohexyl, n-heptyl, isoheptyl, sec-heptyl, tert-heptyl, n-octyl, isooctyl, sec-octyl, tert-octyl, n-nonyl, isononyl, sec-nonyl, and tert-nonyl. In one preferred embodiment of the present invention, the compound of the present invention is represented by the following formula VII where R is 1,1,3,3-tetramethylbutyl:

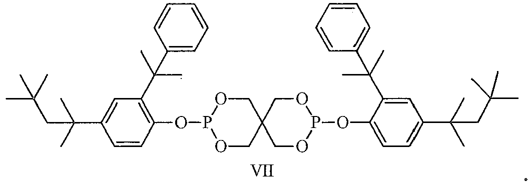

The compound of the present invention may be synthesized by reacting pentaerythritol and a phosphorus trihalide with a phenol compound that has an ortho cumyl and para R group. For example, the compound of formula VII may be prepared by mixing and reacting pentaerythritol and phosphorus trichloride, and then reacting the obtained product with 2-cumyl-4-tert-octylphenol. The detailed synthesis procedure will be provided in the following examples.

The compound of formula VII' of the present invention may be used as an antioxidant for polymer materials solely or in combination with other known anti-oxidizing components. Therefore, the present invention further provides an antioxidant comprising the compound of formula VII' of the present invention. The known anti-oxidizing component is not particularly limited and can be any conventional primary or secondary anti-oxidizing component. For example, the known anti-oxidizing component may be selected from the group consisting of a hindered phenol anti-oxidizing component, a phosphorus based anti-oxidizing component, a sulfur based anti-oxidizing component, an amine based anti-oxidizing component, and combinations thereof. To avoid odor problem that might be caused by sulfur based anti-oxidizing component(s) and amine based anti-oxidizing component(s), preference is given to hindered phenol anti-oxidizing component(s) and phosphorus based anti-oxidizing component(s).

Examples of hindered phenol anti-oxidizing component include but not limited to tetrakis[methylene-3-(3,5-di-tert-butyl-4-hydroxyphenyl)propionate]methane, octadecyl-3-(3,5-di-tert-butyl-4-hydroxyphenyl)propionate, 1,3,5-tris(3,5-di-tert-butyl-4-hydroxybenzyl)isocyanurate, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, 4,4'-isopropylidene-diphenol, butylated hydroxyanisole (BHA), N,N'-hexamethylene-bis-3-(3,5-di-tert-butyl-4-hydroxyphenyl) propionamide, and any combination of the above.

Examples of phosphorus based anti-oxidizing component include but not limited to tris(2,4-di-t-butylphenyl) phosphite, distearyl pentaerythritol diphosphite, trisnonylphenyl phosphite, phenyl diisodecyl phosphite, diphenyl isodecyl phosphite, triphenyl phosphite, trilauryl phosphite, alkyl (C₁₂-C₁₅) bisphenol A phosphite, alkyl (C₁₀) bisphenol A phosphite, bis-(2,4-di-t-butylphenyl) pentaerythritol diphosphite, 2-butyl-2-ethyl-1,3-propanediol 2,4,6-tri-t-butylphenol phosphite, bis-(2,6-di-t-butyl-4-methylphenyl) pentaerythritol diphosphite, bis-(2,4-di-t-butyl-6-methylphenyl) ethyl phosphite, 2,2',2"-nitrilotriethanol tris-(3,3',5,5'-tetra-tert-butyl-1,1'-biphenyl-2,2'-diyl)-phosphite, and any combination of the above.

In the embodiments of the antioxidants of the present invention comprising other conventional anti-oxidizing components, the amount of each component is not particularly limited but can be adjusted depending on needs or optimized through simple experiments by persons with ordinary skill in the art to obtain a better antioxidation efficiency.

The compound of the present invention may be added into a polymer material to provide antioxidation effect during the processing of the polymer material or the lifespan of the product manufactured from the polymer material, to thereby prevent the deterioration of the polymer material during processing and prolong the lifespan of the product. Therefore, the present invention further provides a polymer composition, comprising a polymer and the spiro bisphosphite based compound or the antioxidant according to the present invention. In the polymer composition of the present invention, the amount of the compound of Formula VII' or the antioxidant is not particularly limited, as long as it is sufficient to provide the desired antioxidation efficiency. To avoid affecting the properties of the polymer, the compound of Formula VII' or the antioxidant is preferably added with a small dosage. Generally, the amount of the compound of Formula VII' or the antioxidant is about 0.01 parts by weight to about 5 parts by weight per 100 parts by weight of the polymer, preferably about 0.05 parts by weight to about 0.5 parts by weight per 100 parts by weight of the polymer, and more preferably about 0.1 parts by weight to about 0.3 parts by weight per 100 parts by weight of the polymer. In some embodiments of the present invention, the amount of the compound of Formula VII' or the antioxidant is about 0.15 parts by weight to about 0.2 parts by weight per 100 parts by weight of the polymer.

The compound of Formula VII' of the present invention is an anti-oxidizing component suitable for any kind of polymer material, therefore the polymer of the polymer composition of the present invention is not particularly limited and may be any known polymer. For example, the polymer may be selected from the group consisting of polyesters, polyalkylphthalates, polyurethanes, polysulfones, polyimides, polyphenylene ethers, styrene based polymers, acrylate based polymers, polyamides, polyacetals, halogen containing polymers, polyolefins, and combinations thereof. However, the polymer in the polymer composition of the present invention is preferably a thermoplastic polymer. This is because thermoplastic polymers usually involve high temperature processing such as pelletizing and compounding and the processing temperature is usually higher than 250°C, they are especially in need of an antioxidant with excellent thermal stability. Examples of thermoplastic polymers include but not limited to polyamide, polyhydrocarbons, polyester, polycarbonate, polyethylene, polypropylene, polyethylene terephthalate, polybutylene terephthalate, polystyrene, polyacrylate, poly(methyl methacrylate), polyvinylchloride, polyphenylene oxide, polyoxymethylene, thermoplastic polyolefins, thermoplastic elastomer, liquid crystal polymers, polyurethane, polyurea, styrene-acrylonitrile copolymer, styrene-butadiene copolymer, acrylonitrile-butadiene-styrene copolymer, and any combination of the above. In some embodiments of the present invention, the polymer is selected from the group consisting of polyolefins, polyester, and combinations thereof.

The polymer composition of the present invention may optionally further comprise one of more additives, such as a heat stabilizer, a filler, a compatibilizer, a flame retardant, an UV absorber, a light stabilizer, a metal deactivator, a nucleating agent, a plasticizer, a lubricant, an emulsifier, a pigment, a brightener, an antistatic agent, a foaming agent, etc., to improve the properties of the polymer, like workability, stability and flame retardancy. For example, filler selected from the following group may be added into the polymer composition of the present invention: glass fiber, calcium stearate, calcium carbonate, silicates, talc, kaolin, mica, barium sulfate, silicon carbide, carbon black, silicon dioxide, aluminum hydroxide, and combinations thereof. In the case where filler is added, the amount of filler is not particularly limited, as long as it does not affect the properties of the polymer material. In general, the amount of filler is about 0.01 parts by weight to about 50 parts by weight per 100 parts by weight of the polymer.

The present invention is further illustrated by the following embodiments, which are only for illustration and the scope of the present invention should not be limited thereto.

### Examples

### [Preparation Example 1: preparation of the compound of formula VII of the present invention (hereinafter "Compound VII")]

To a 1 L four-necked round-bottom flask in an ice bath, 34.1 g pentaerythritol and 70 g toluene were added in sequence with stirring. Under a 20 °C cool bath, 71.3 g phosphorus trichloride was added drop-wisely to the round-bottom flask by a funnel in 30 minutes. The obtained mixture was stirred for an additional 30 minutes to react. The cool bath was then removed, and the mixture was brought to ambient temperature under vacuum for 30 minutes. Then, a mixture of 51.1 g triethylamine and 140 g toluene was added to the round-bottom flask and the obtained mixture was heated to 80 °C. A mixture of 161.9 g 2-cumyl-4-tert-octylphenol (from Schenectady International Company) and 140 g toluene was added drop-wisely to the round-bottom flask by a funnel in 60 minutes. After the addition was finished, the mixture was maintained at 80 °C to react for 60 minutes. After the reaction was determined as complete through thin-layer chromatography (TLC), the mixture was filtered, and the filtered cake was washed by 70 g toluene. The filtrate was combined and was added with 3 g triethylamine and extracted twice with 100 g water. The organic layer was collected and concentrated under vacuum. The concentrate was recrystallized in a mixture solution of toluene and methanol to obtain Compound VII as white crystal in 82% yield.
¹H NMR (400 MHz, CDCl₃): 0.75 (s, 18H, -C(CH₃)₂CH₂C(C**H**₃)₃), 1.39 (s, 12H, -C(C**H**₃)₂CH₂C(CH₃)₃), 1.66 (s, 12H, -C(C**H**₃)₂ArH), 1.75 (s, 4H, -C(CH₃)₂C**H**₂C(CH₃)₃), 2.55-2.60 (t, 2H, -CC**H**₂OP-), 2.84-2.88 (d, 2H, -CC**H**₂OP-), 3.47-3.50 (d, 2H, -CC**H**₂OP-), 3.96-4.02 (t, 2H, -CC**H**₂OP-), 6.85-6.87 (d, 2H, -OAr**H**-), 7.11-7.16 (td, 8H, -C(CH₃)₂Ar**H**, -OAr**H**-), 7.20-7.24 (t, 4H, -C(CH₃)₂Ar**H**), 7.54 (s, 2H, -OAr**H**-).
¹³C NMR (CDCl₃/TMS): 30.02, 30.62, 31.79, 31.87, 32.40, 36.08, 38.33, 42.31, 57.08, 61.63, 61.86, 76.69, 77.00, 77.32, 117.19, 117.36, 124.93, 125.03, 125.36, 125.71, 128.06, 137.84, 143.96, 148.27, 148.34, 151.92.
Elemental analysis: calculated: C%=72.83, H%=8.39, O%=11.41, P%=7.37; found: C%=72.90, H%=8.59, O%=11.65, P%=7.10.
High-resolution mass spectrum (electron impact) (HRMS (EI)): calculated: 840.46;
found: 840.60.

### [Example 1: thermal stability test and hydrolytic stability test]

The following conventional antioxidant compounds (Comparative compounds I to VI) and the compound of formula VII of the present invention (Compound VII) were exposed to 80% humidity at ambient temperature for 7 days. The TGA temperature (i.e. the temperature at 1% weight loss) and the acid numbers of the compounds before and after the exposure were measured and tabulated in the following Tables 1 and 2.

| | |
|---|---|
| Comparative compound I: | Deox 68 (Chitec Technology), a compound represented by formula I |
| Comparative compound II: | Deox 604 (Chitec Technology), a compound represented by formula II |
| Comparative compound III: | prepared according to US 4,983,657, a compound represented by formula III |
| Comparative compound IV: | ADK STAB® PEP-36 (Adeka), a compound represented by formula IV |
| Comparative compound V: | Doverphos® S-9228PC (Dover Chemical), a compound represented by formula V |
| Comparative compound VI: Compound VII: | Irgafos® 12 (BASF), a compound represented by formula VI the compound of formula VII of the present invention |

**Table 1: the TGA temperature of each compound before/after being exposed to 80% humidity at ambient temperature for 7 days**

| Compound | I | II | III | IV | V | VI | VII |
|---|---|---|---|---|---|---|---|
| Initial (°C) | 220 | 230 | 302 | 250 | 266 | 250 | 321 |
| After 7 days (°C) | 220 | 120 | 150 | 249 | 257 | 250 | 317 |

As shown in Table 1, among Comparative compounds I to VI and Compound VII, only Compound III and Compound VII of the present invention have an initial TGA temperature value higher than 280 °C, a typical compounding temperature for engineering plastics. In particular, the TGA temperature of Compound VII of the present invention is even higher than 320 °C, which is significantly higher than the general processing temperature that polymer materials may go through. Furthermore, after being exposed to 80% humidity at ambient temperature for 7 days, only the Compound VII of the present invention can retain a TGA temperature higher than 300 °C. The TGA temperature of the Comparative compound III is considerably deteriorated to 150 °C. The above results manifest that the Compound VII of the present invention has excellent thermal and hydrolytic stability.

**Table 2: acid number of each compound before/after being exposed to 80% humidity at ambient temperature for 7 days**

| Compound | I | II | III | IV | V | VI | VII |
|---|---|---|---|---|---|---|---|
| Initial | 0.03 | 0.08 | 0.06 | 0.04 | 0.87 | 0.01 | 0.02 |
| After 7 days | 0.04 | 22.8 | 12.1 | 0.07 | 1.24 | 0.02 | 0.03 |

The acid number is an index to determine the hydrolytic stability of a compound. A stable acid number value indicates that the compound only slightly decomposed into other lower molecular compounds (e.g. phosphoric acid) and therefore has a better hydrolytic stability. As shown in Table 2, the change of the acid number of the Compound VII of the present invention is very small, which shows that Compound VII of the present invention has excellent hydrolytic stability.

### [Example 2: color stability test]

Comparative compounds I to VI and Compound VII of the present invention were individually heated at 280 °C for 2 hours and the color change thereof was observed and tabulated in the following Table 3.

**Table 3: the color change of each compound before/after being heated at 280 °C for 2 hours**

| Compound | I | II | III | IV | V | VI | VII |
|---|---|---|---|---|---|---|---|
| Initial | white powder | white powder | white powder | white powder | white powder | white powder | white powder |
| Color after heat treatment | light yellow | yellow | yellow | light yellow | yellow | brown | colorless |

As shown in Table 3, only the Compound VII of the present invention does not discolor after being heated at 280 °C for 2 hours. This manifests that the heat stability of the Compound VII of the present invention is significantly better than that of Comparative compounds I to VI, and is sufficient for general high temperature processing of polymer material.

### [Example 3: antioxidation efficiency in polypropylene]

100 parts by weight of polypropylene (MFI=0.3) (TAIRIPRO B1101, Formosa Chemicals & Fibre) was ground to powder and then mixed with 0.05 parts by weight of calcium stearate and 0.05 parts by weight of pentaerythritol tetrakis(3-(3,5-di-tert-butyl-4-hydroxyphenyl)propionate) (a phenolic antioxidant named Deox 10, Chitec Technology) evenly. The mixture was then added with 0.15 parts by weight of Comparative compounds I, V or VI or Compound VII to form a polypropylene composition. The polypropylene composition was compounded and pelletized using a Coperion twin-screw extruder equipped with a water-bath cooling system at 5 to 10 °C, at a screw speed of 220 rpm and a low shear force configuration at 280 °C.

The obtained pellets were extruded 5 times at 280 °C. The melt-flow index (MFI) and yellowness index (YI) according to ASTM E313 were measured after the 1^{st}, 3^{rd}, and 5^{th} extrusion and the results were tabulated in the following Table 4.

**Table 4: results of melt flow index and yellowness index**

| Polypropylene composition | YI at 1^{st} pass | YI at 3^{rd} pass | YI at 5^{th} pass | MFI at 1^{st} pass | MFI at 3^{rd} pass | MFI at 5^{th} pass |
|---|---|---|---|---|---|---|
| without phosphite based antioxidant | -20.17 | -12.53 | 1.77 | 0.49 | 0.62 | 2.69 |
| with Comparative compound I | -20.61 | -12.45 | 0.66 | 0.35 | 0.52 | 1.10 |
| with Comparative compound V | -20.89 | -14.69 | -5.16 | 0.34 | 0.49 | 0.75 |
| with Comparative compound VI | -20.83 | -14.81 | -6.73 | 0.34 | 0.47 | 0.71 |
| with Compound VII | -21.10 | -17.81 | -7.89 | 0.33 | 0.40 | 0.61 |

As shown in Table 4, changes of melt flow index and yellowness index of the pellet obtained from the polypropylene composition added with Compound VII of the present invention are the smallest. This result manifests that Compound VII of the present invention has excellent antioxidation efficiency and could best protect the polypropylene pellet from deterioration after multi-extrusions.

### [Example 4: antioxidation efficiency in polyethylene]

100 parts by weight of polyethylene (MFI=3) (NA 112-27, USI Corporation) was ground to powder and then mixed with 0.05 parts by weight of pentaerythritol tetrakis(3-(3,5-di-tert-butyl-4-hydroxyphenyl)propionate) (a phenolic antioxidant named Deox 10, Chitec Technology) evenly. The mixture was then added with 0.15 parts by weight of Comparative compounds I, V or VI or Compound VII to form a polyethylene composition. The polyethylene composition was compounded and pelletized using a Coperion twin-screw extruder equipped with a water-bath cooling system at 5 to 10 °C, at a screw speed of 220 rpm and a low shear force configuration at 220 °C.

The obtained pellets were extruded 5 times at 220 °C. The melt-flow index (MFI) and yellowness index (YI) according to ASTM E313 were measured after the 1^{st}, 3^{rd}, and 5^{th} extrusion. The results were tabulated in the following Table 5.

**Table 5: results of melt flow index and yellowness index**

| Polyethylene composition | YI at 1^{st} pass | YI at 3^{rd} pass | YI at 5^{th} pass | MFI at 1^{st} pass | MFI at 3^{rd} pass | MFI at 5^{th} pass |
|---|---|---|---|---|---|---|
| without phosphite based antioxidant | -17.92 | -15.41 | -13.42 | 2.35 | 2.36 | 2.20 |
| with Comparative compound I | -18.61 | -16.19 | -14.04 | 2.35 | 2.31 | 2.40 |
| with Comparative compound V | -17.67 | -15.06 | -14.23 | 2.38 | 2.36 | 2.38 |
| with Comparative compound VI | -17.46 | -15.08 | -14.81 | 2.36 | 2.34 | 2.45 |
| with Compound VII | -18.82 | -16.70 | -15.54 | 2.34 | 2.36 | 2.34 |

As shown in Table 5, changes of melt flow index and yellowness index of the pellet obtained from the polyethylene composition added with Compound VII of the present invention changed are very small. This result manifests that Compound VII of the present invention has excellent antioxidation efficiency and could effectively protect the polyethylene pellet from deterioration after multi-extrusions.

### [Example 5: antioxidation efficiency in polybutylene terephthalate (PBT)]

100 parts by weight of polybutylene terephthalate (CCP PBT 4130-104D, containing glass fiber and flame retardant, Chang Chun Plastics) was ground to powder and then mixed with 0.2 parts by weight of Comparative compounds I, V or VI or Compound VII to form a polybutylene terephthalate composition. The obtained compositions were compounded and pelletized using a Coperion twin-screw extruder at a screw speed of 250 rpm, an output rate of 40 kg/hour, and under 300 °C.

The obtained pellets were molded into test pieces at 250 °C. The pieces were aged at 120 °C for 7 days, and the impact strength according to ASTM D256 and yellowness index (YI) according to ASTM E313 were measured before and after the aging test. The results were tabulated in the following Table 6.

**Table 6: results of yellowness index and impact strength**

| Polybutylene terephthalate composition | YI before aging | YI after aging | Impact strength before aging (J/m²) | Impact strength after aging (J/m²) |
|---|---|---|---|---|
| without phosphite based antioxidant | 6.06 | 8.76 | 8.09 | 6.93 |
| with Comparative compound I | 5.74 | 7.25 | 8.72 | 7.75 |
| with Comparative compound V | 5.48 | 6.39 | 7.14 | 7.24 |
| with Comparative compound VI | 5.47 | 6.57 | 8.03 | 7.92 |
| with Compound VII | 5.50 | 6.15 | 8.86 | 8.42 |

As shown in Table 6, changes of yellowness index and the impact strength of the test piece obtained by the polybutylene terephthalate composition added with Compound VII of the present invention before and after the aging test are very small. In particular, the change of yellowness index is the smallest one among the tested pieces. This result also manifests the excellent antioxidation efficiency of the Compound VII of the present invention.

## Claims

1. A spiro bisphosphite based compound represented by the following formula VII': 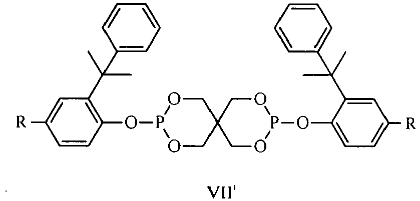 wherein R represents a cyclic, linear or branched alkyl group with 4 to 9 carbon atoms.

2. The compound according to claim 1, wherein R represents a cyclic, linear or branched alkyl group with 7 to 9 carbon atoms.

3. The compound according to claim 1 or 2, which is of the following formula VII:

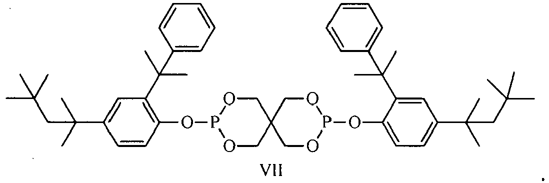

4. An antioxidant, comprising the spiro bisphosphite based compound according to any one of claims 1 to 3.

5. The antioxidant according to claim 4, which further comprises an anti-oxidizing component selected from the group consisting of a hindered phenol anti-oxidizing component, a phosphorus based anti-oxidizing component, a sulfur based anti-oxidizing component, an amine based anti-oxidizing component, and combinations thereof.

6. The antioxidant according to claim 4 or 5, which further comprises a hindered phenol anti-oxidizing component selected from the group consisting of tetrakis[methylene-3-(3,5-di-tert-butyl-4-hydroxyphenyl)propionate]methane, octadecyl-3-(3,5-di-tert-butyl-4-hydroxyphenyl)propionate, 1,3,5-tris(3,5-di-tert-butyl-4-hydroxybenzyl)isocyanurate, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, 4,4'-isopropylidene-diphenol (bisphenol A), butylated hydroxyanisole (BHA), N,N'-hexamethylene-bis-3-(3,5-di-tert-butyl-4-hydroxyphenyl) propionamide, and combinations thereof.

7. The antioxidant according to any one of claims 4 to 6, which further comprises a phosphorus based anti-oxidizing component selected from the group consisting of tris-(2,4-di-t-butylphenyl) phosphite, distearyl pentaerythritol diphosphite, trisnonylphenyl phosphite, phenyl diisodecyl phosphite, diphenyl isodecyl phosphite, triphenyl phosphite, trilauryl phosphite, alkyl (C₁₂-C₁₅) bisphenol A phosphite, alkyl (C₁₀) bisphenol A phosphite, bis-(2,4-di-t-butylphenyl) pentaerythritol diphosphite, 2-butyl-2-ethyl-1,3-propanediol 2,4,6-tri-t-butylphenol phosphite, bis-(2,6-di-t-butyl-4-methylphenyl) pentaerythritol diphosphite, bis-(2,4-di-t-butyl-6-methylphenyl) ethyl phosphite, 2,2',2"-nitrilotriethanol tris-(3,3',5,5'-tetra-tert-butyl-1,1'-biphenyl-2,2'-diyl)-phosphite, and combinations thereof.

8. A polymer composition, comprising:
a polymer; and
the spiro bisphosphite based compound according to any one of claims 1 to 3, or
the antioxidant according to any one of claims 4 to 7.

9. The polymer composition according to claim 8, wherein the amount of the spiro bisphosphite based compound or the antioxidant is 0.01 parts by weight to 5 parts by weight per 100 parts by weight of the polymer.

10. The polymer composition according to claim 8 or 9, wherein the amount of the spiro bisphosphite based compound or the antioxidant is 0.05 parts by weight to 0.5 parts by weight per 100 parts by weight of the polymer.

11. The polymer composition according to any one of claims 8 to 10, wherein the polymer is selected from the group consisting of polyesters, polyalkylphthalates, polyurethanes, polysulfones, polyimides, polyphenylene ethers, styrene based polymers, acrylate based polymers, polyamides, polyacetals, halogen containing polymers, polyolefins, and combinations thereof.

12. The polymer composition according to any one of claims 8 to 11, wherein the polymer is a thermoplastic polymer.

13. The polymer composition according to any one of claims 8 to 12, wherein the polymer is a thermoplastic polymer selected from the group consisting of polyamide, polyhydrocarbons, polyester, polycarbonate, polyethylene, polypropylene, polyethylene terephthalate, polybutylene terephthalate, polystyrene, polyacrylate, poly(methyl methacrylate), polyvinylchloride, polyphenylene oxide, polyoxymethylene, thermoplastic polyolefins, thermoplastic elastomer, liquid crystal polymers, polyurethane, polyurea, styrene-acrylonitrile copolymer, styrene-butadiene copolymer, acrylonitrile-butadiene-styrene copolymer, and combinations thereof.

14. The polymer composition according to any one of claims 8 to 13, wherein the polymer is a thermoplastic polymer selected from the group consisting of polyhydrocarbons, polyester, and combinations thereof.

15. The polymer composition according to any one of claims 8 to 14, which further comprises an additive selected from the group consisting of a heat stabilizer, a filler, a compatibilizer, a flame retardant, an UV absorber, a light stabilizer, a metal deactivator, a nucleating agent, a plasticizer, a lubricant, an emulsifier, a pigment, a brightener, an antistatic agent, a foaming agent, and combinations thereof.

16. The polymer composition according to any one of claims 8 to 15, which comprises a filler selected from the group consisting of glass fiber, calcium stearate, calcium carbonate, silicates, talc, kaolin, mica, barium sulfate, silicon carbide, carbon black, silicon dioxide, aluminum hydroxide, and combinations thereof, wherein the amount of the filler is 0.01 parts by weight to 50 parts by weight per 100 parts by weight of the polymer.

## Patentansprüche

1. Spiroverbindung auf Bisphosphitbasis, dargestellt durch die folgende Formel VII': 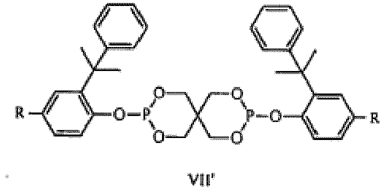 wobei R für eine cyclische, lineare oder verzweigte Alkylgruppe mit 4 bis 9 Kohlenstoffatomen steht.

2. Verbindung gemäß Anspruch 1, wobei R für eine cyclische, lineare oder verzweigte Alkylgruppe mit 7 bis 9 Kohlenstoffatomen steht.

3. Verbindung gemäß Anspruch 1 oder 2, die der folgenden Formel VII entspricht:

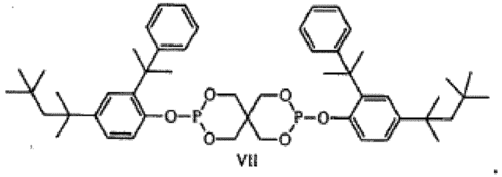

4. Antioxidans, umfassend die Spiroverbindung auf Bisphosphitbasis gemäß einem der Ansprüche 1 bis 3.

5. Antioxidans gemäß Anspruch 4, das weiterhin eine antioxidative Komponente umfasst, die aus der Gruppe ausgewählt ist, die aus einer antioxidativen Komponente in Form eines gehinderten Phenols, einer antioxidativen Komponente auf Phosphorbasis, einer antioxidativen Komponente auf Schwefelbasis, einer antioxidativen Komponente auf Aminbasis und Kombinationen davon besteht.

6. Antioxidans gemäß Anspruch 4 oder 5, das weiterhin eine antioxidative Komponente in Form eines gehinderten Phenols umfasst, die aus der Gruppe ausgewählt ist, die aus Tetrakis[methylen-3-(3,5-di-tert-butyl-4-hydroxyphenyl)propionat]methan, Octadecyl-3-(3,5-di-tert-butyl-4-hydroxyphenyl)propionat, 1,3,5-Tris(3,5-di-tert-butyl-4-hydroxybenzyl)-isocyanurat, 1,1,3-Tris(2-methyl-4-hydroxy-5-tert-butylphenyl)butan, 1,3,5-Trimethyl-2,4,6-tris(3,5-di-tert-butyl-4-hydroxybenzyl)benzol, 4,4'-Isopropylidendiphenol (Bisphenol A), butyliertem Hydroxyanisol (BHA), N,N'-Hexamethylen-bis-3-(3,5-di-tert-butyl-4-hydroxyphenyl)propionamid und Kombinationen davon besteht.

7. Antioxidans gemäß einem der Ansprüche 4 bis 6, das weiterhin eine antioxidative Komponente auf Phosphorbasis umfasst, die aus der Gruppe ausgewählt ist, die aus Tris(2,4-di-t-butylphenyl)phosphit, Distearylpentaerythritdiphosphit, Trisnonylphenylphosphit, Phenyldiisodecylphosphit, Diphenylisodecylphosphit, Triphenylphosphit, Trilaurylphosphit, Alkyl-(C₁₂-C₁₅)bisphenol-A-phosphit, Alkyl(C₁₀)bisphenol-A-phosphit, Bis(2,4-di-t-butylphenyl)pentaerythritdiphosphit, 2-Butyl-2-ethyl-1,3-propandiol-2,4,6-tri-t-butylphenolphosphit, Bis(2,6-di-t-butyl-4-methylphenyl)penta-erythritdiphosphit, Bis(2,4-di-t-butyl-6-methylphenyl)ethylphosphit, 2,2',2"-Nitrilotriethanoltris(3,3',5,5'-tetra-tert-butyl-1,1'-biphenyl-2,2'-di-yl)phosphit und Kombinationen davon besteht.

8. Polymerzusammensetzung, umfassend:
ein Polymer; und
die Spiroverbindung auf Bisphosphitbasis gemäß einem der Ansprüche 1 bis 3 oder das Antioxidans gemäß einem der Ansprüche 4 bis 7.

9. Polymerzusammensetzung gemäß Anspruch 8, wobei die Menge der Spiroverbindung auf Bisphosphitbasis oder des Antioxidans 0,01 Gewichtsteile bis 5 Gewichtsteile pro 100 Gewichtsteile des Polymers beträgt.

10. Polymerzusammensetzung gemäß Anspruch 8 oder 9, wobei die Menge der Spiroverbindung auf Bisphosphitbasis oder des Antioxidans 0,05 Gewichtsteile bis 0,5 Gewichtsteile pro 100 Gewichtsteile des Polymers beträgt.

11. Polymerzusammensetzung gemäß einem der Ansprüche 8 bis 10, wobei das Polymer aus der Gruppe ausgewählt ist, die aus Polyestern, Polyalkylphthalaten, Polyurethanen, Polysulfonen, Polyimiden, Polyphenylenethern, Polymeren auf Styrolbasis, Polymeren auf Acrylatbasis, Polyamiden, Polyacetalen, halogenhaltigen Polymeren, Polyolefinen und Kombinationen davon besteht.

12. Polymerzusammensetzung gemäß einem der Ansprüche 8 bis 11, wobei das Polymer ein thermoplastisches Polymer ist.

13. Polymerzusammensetzung gemäß einem der Ansprüche 8 bis 12, wobei das Polymer ein thermoplastisches Polymer ist, das aus der Gruppe ausgewählt ist, die aus Polyamid, Polykohlenwasserstoffen, Polyester, Polycarbonat, Polyethylen, Polypropylen, Polyethylenterephthalat, Polybutylenterephthalat, Polystyrol, Polyacrylat, Poly(methylmethacrylat), Polyvinylchlorid, Polyphenylenoxid, Polyoxymethylen, thermoplastischen Polyolefinen, thermoplastischem Elastomer, Flüssigkristallpolymeren, Polyurethan, Polyharnstoff, Styrol-Acrylnitril-Copolymer, Styrol-Butadien-Copolymer, Acrylnitril-Butadien-Styrol-Copolymer und Kombinationen davon besteht.

14. Polymerzusammensetzung gemäß einem der Ansprüche 8 bis 13, wobei das Polymer ein thermoplastisches Polymer ist, das aus der Gruppe ausgewählt ist, die aus Polykohlenwasserstoffen, Polyester und Kombinationen davon besteht.

15. Polymerzusammensetzung gemäß einem der Ansprüche 8 bis 14, die weiterhin ein Additiv umfasst, das aus der Gruppe ausgewählt ist, die aus einem Hitzestabilisator, einem Füllstoff, einem Verträglichkeitsvermittler, einem Flammschutzmittel, einem UV-Absorber, einem Lichtstabilisator, einem Metalldeaktivator, einem Keimbildner, einem Weichmacher, einem Gleitmittel, einem Emulgator, einem Pigment, einem Aufheller, einem Antistatikmittel, einem Schaummittel und Kombinationen davon besteht.

16. Polymerzusammensetzung gemäß einem der Ansprüche 8 bis 15, die einen Füllstoff umfasst, der aus der Gruppe ausgewählt ist, die aus Glasfaser, Calciumstearat, Calciumcarbonat, Silicaten, Talk, Kaolin, Glimmer, Bariumsulfat, Siliciumcarbid, Ruß, Siliciumdioxid, Aluminiumhydroxid und Kombinationen davon besteht.

## Revendications

1. Composé spiro à base de bisphosphite, représenté par la formule VII' suivante : 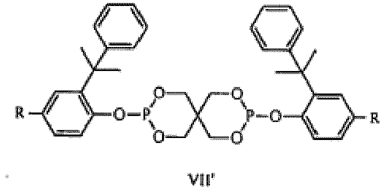 où R représente un groupe alkyle cyclique, linéaire ou ramifié avec 4 à 9 atomes de carbone.

2. Composé selon la revendication 1, dans lequel R représente un groupe alkyle cyclique, linéaire ou ramifié avec 7 à 9 atomes de carbone.

3. Composé selon la revendication 1 ou 2, qui répond à la formule VII suivante :

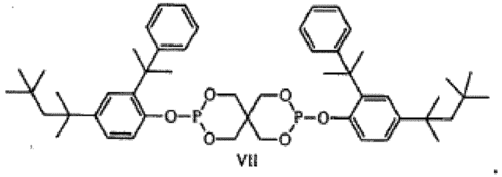

4. Antioxydant comprenant le composé spiro à base de bisphosphite selon l'une quelconque des revendications 1 à 3.

5. Antioxydant selon la revendication 4, comprenant en outre un composant antioxydant choisi dans le groupe consistant en un composant antioxydant à base de phénol encombré, un composant antioxydant à base de phosphore, un composant antioxydant à base de soufre, un composant antioxydant à base d'amine, et des combinaisons de ceux-ci.

6. Antioxydant selon la revendication 4 ou 5, comprenant en outre un composant antioxydant à base de phénol encombré choisi dans le groupe consistant en tétrakis[méthylène-3-(3,5-di-tert-butyl-4-hydroxyphényl)-propionate]méthane, octadécyl-3-(3,5-di-tert-butyl-4-hydroxyphényl)-propionate, isocyanurate de 1,3,5-tris(3,5-di-tert-butyl-4-hydroxy-benzyle), 1,1,3-tris(2-méthyl-4-hydroxy-5-tert-butylphényl)butane, 1,3,5-triméthyl-2,4,6-tris(3,5-di-tert-butyl-4-hydroxybenzyl)benzène, 4,4'-isopropylidènediphénol (bisphénol A), hydroxyanisole butylé (BHA), N,N'-hexaméthylènebis-3-(3,5-di-tert-butyl-4-hydroxyphényl)propionamide, et des combinaisons de ceux-ci.

7. Antioxydant selon l'une quelconque des revendications 4 à 6, comprenant en outre un composant antioxydant à base de phosphore choisi dans le groupe consistant en phosphite de tris(2,4-di-t-butylphényle), diphosphite de distéaryl-pentaérythritol, phosphite de trisnonylphényle, phosphite de phényl-diisodécyle, phosphite de diphényl-isodécyle, phosphite de triphényle, phosphite de trilauryle, phosphite d'alkyl(C₁₂-C₁₅) bisphénol A, phosphite d'alkyl-(C₁₀)-bisphénol A, diphosphite de bis(2,4-di-t-butylphényl)-pentaérythritol, phosphite de 2-butyl-2-éthyl-1,3-propandiol-2,4,6-tri-t-butylphénol, diphosphite de bis(2,6-di-t-butyl-4-méthylphényl)-pentaérythritol, phosphite de bis(2,4-di-t-butyl-6-méthylphényl)-éthyl, phosphite de 2,2',2"-nitrilotriéthanoltris(3,3',5,5'-tétra-tert-butyl-1,1'-biphényl-2,2'-diyle), et des combinaisons de ceux-ci.

8. Composition de polymères, comprenant :
un polymère, et
le composé spiro à base de bisphosphite selon l'une quelconque des revendications 1 à 3, ou l'antioxydant selon l'une quelconque des revendications 4 à 7.

9. Composition de polymères selon la revendication 8, dans laquelle la quantité du composé spiro à base de bisphosphite ou de l'antioxydant est de 0,01 parties en poids à 5 parties en poids, pour 100 parties en poids du polymère.

10. Composition de polymères selon la revendication 8 ou 9, dans laquelle la quantité du composé spiro à base de bisphosphite ou de l'antioxydant est de 0,05 parties en poids à 0,5 parties en poids, pour 100 parties en poids du polymère.

11. Composition de polymères selon l'une quelconque des revendications 8 à 10, dans laquelle le polymère est choisi dans le groupe consistant en polyesters, polyphtalates d'alkyle, polyuréthanes, polysulfones, polyimides, polyphénylène éthers, polymères à base de styrène, polymères à base d'acrylate, polyamides, polyacétals, polymères halogénés, polyoléfines, et des combinaisons de ceux-ci.

12. Composition de polymères selon l'une quelconque des revendications 8 à 11, dans laquelle le polymère est un polymère thermoplastique.

13. Composition de polymères selon l'une quelconque des revendications 8 à 12, dans laquelle le polymère est un polymère thermoplastique choisi dans le groupe consistant en polyamide, polyhydrocarbures, polyester, polycarbonate, polyéthylène, polypropylène, polyéthylène téréphtalate, polybutylène téréphtalate, polystyrène, polyacrylate, polyméthacrylate de méthyle, polychlorure de vinyle, polyphénylène oxyde, polyoxyméthylène, polyoléfines thermoplastiques, élastomère thermoplastique, polymères à cristaux liquides, polyuréthane, polyurée, copolymère de styrène et d'acrylonitrile, copolymère de styrène et de butadiène, copolymère acrylonitrile-butadiène-styrène, et des combinaisons de ceux-ci.

14. Composition de polymères selon l'une quelconque des revendications 8 à 13, dans laquelle le polymère est un polymère thermoplastique choisi dans le groupe consistant en polyhydrocarbures, polyester, et des combinaisons de ceux-ci.

15. Composition de polymères selon l'une quelconque des revendications 8 à 14, comprenant en outre un additif choisi dans le groupe consistant en un stabilisant chaleur, une charge, un compatibilisant, un retardateur de flamme, un absorbeur d'UV, un photostabilisant, un désactivateur de métaux, un agent de nucléation, un plastifiant, un lubrifiant, un émulsifiant, un pigment, un brillanteur, un agent antistatique, un agent de moussage, et des combinaisons de ceux-ci.

16. Composition de polymères selon l'une quelconque des revendications 8 à 15, comprenant une charge choisi dans le groupe consistant en fibre de verre, stéarate de calcium, carbonate de calcium, silicates, talc, kaolin, mica, sulfate de baryum, carbure de silicium, noir de carbone, dioxyde de silicium, hydroxyde d'aluminium, et des combinaisons de ceux-ci, dans laquelle la quantité de la charge est de 0,01 parties en poids à 50 parties en poids, pour 100 parties en poids du polymère.
